(19)

Europäisches
Patentamt

European
Patent Office

Office européen
des brevets

(11) **EP 4 390 346 A1**

(12) **EUROPEAN PATENT APPLICATION**

(43) Date of publication:
**26.06.2024 Bulletin 2024/26**

(21) Application number: **23214509.4**

(22) Date of filing: **06.12.2023**

(51) International Patent Classification (IPC):
**G01J 5/00** *(2022.01)*　　　　**F24C 7/08** *(2006.01)*
**H05B 6/06** *(2006.01)*　　　　**G01J 5/02** *(2022.01)*

(52) Cooperative Patent Classification (CPC):
**G01J 5/0003;** F24C 7/083; G01J 5/0275;
H05B 6/062

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.12.2022 KR 20220182116**

(71) Applicant: **LG Electronics Inc.**
**Yeongdeungpo-gu**
**Seoul 07336 (KR)**

(72) Inventors:
• **MOON, Hyunwook**
**08592 Seoul (KR)**
• **HAN, Sol**
**08592 Seoul (KR)**
• **PARK, Kyungho**
**08592 Seoul (KR)**

(74) Representative: **Vossius & Partner**
**Patentanwälte Rechtsanwälte mbB**
**Siebertstrasse 3**
**81675 München (DE)**

(54) **DEVICE FOR MEASURING TEMPERATURE**

(57)　　The present disclosure provides an induction heating-type cooktop that determines whether a cooking container is boiling regardless of various variables such as an amount of water and a material of the container. The induction heating-type cooktop may include an upper plate on which a cooking container is disposed, a working coil that generates magnetic fields passing through the cooking container, an inverter that supplies current to the working coil, a sensor that detects a temperature of the cooking container, a controller that determines whether the cooking container is boiling. The controller may determine whether the cooking container is boiling by applying input data obtained from the sensor and the inverter to a boiling prediction model.

【Figure 1】

100

EP 4 390 346 A1

Description

## CROSS-REFERENCE TO RELATED APPLICATIONS

The present application claims priority to Korean Patent Application No. 10-2022-0182116 (filed on December 22, 2022).

## BACKGROUND

The present disclosure relates to a device for measuring a temperature. More particularly, the present disclosure relates to a device for measuring a temperature, which is configured to measure a temperature of a surface of an object to be heated so as to acquire a temperature of a load provided in the object to be heated.

To cook a delicious dish, it is important to perform each process at the correct temperature, even if it is the same cooking process. Thus, there are various devices for measuring a temperature, which accurately measures a temperature of food during cooking.

Such a device for measuring a temperature includes a contact-type temperature measurement device that is in direct contact with food to measure a temperature of the food and a non-contact temperature measurement device that measures a temperature of food without being in contact with the food.

An example of the contact-type temperature measurement device includes a probe-type temperature measurement device. The probe-type temperature measurement device may measure a temperature inside food by poking the food that is in a solid state or measure a temperature of food by immersing the food into food that is in a liquid state. Since this probe-type temperature measurement device is in direct contact with food, the probe-type temperature measurement device may accurately measure a temperature of the food. However, the probe-type temperature measurement device has a limitation in that the device is contaminated with the food during the temperature measurement process and thus is required to be cleaned each time whenever the device is used. In addition, in the case of dishes that have to be cooked with a cooking container closed, the cooking container has to be opened to measure a temperature, which is inconvenient as it is difficult to use while mounted on the cooking container. In addition, in the case of dishes cooked at a high temperatures, such as frying, there is a risk of damage to the temperature measurement device.

An example of the non-contact temperature measurement device is a temperature measurement device using an infrared (I) sensor or a negative temperature coefficient (NTC) sensor. The IR sensor measures a temperature of the cooking container using infrared rays. In addition, the NTC sensor measures the temperature of the cooking container using the characteristic in which resistance decreases when a temperature increases. The non-contact temperature measurement device does not require cleaning and is provided in the cooking device or cooking container itself and thus does not have a limitation in mounting, and there is no risk of damage even when cooking at high temperatures.

However, the non-contact temperature measurement device for measuring a temperature of food according to the related art is provided in the cooking appliance or cooking container itself, and thus, there is a limitation to the environment in which the temperature measurement device is used, such as not being able to move freely or having a limit in usable cooking container. In addition, there is a limitation in that the various cooking environments could not be reflected in a process of estimating the temperature of food using the measured temperature of the cooking container. That is, there is a limitation in that the conditions for accurately acquiring the temperature of the food are limited.

## SUMMARY

Embodiments provide a device for measuring a temperature, which is provided outside a cooking appliance or cooking container so as to be sued in cooking containers having various heights or in various cooking environments.

Embodiments also provide a device for measuring a temperature, which is capable of acquiring a type and material of a cooking container without separately inputting the type and material of the cooking container.

Embodiments also provide a device for measuring a temperature, which accurately provides a temperature of a load even if cooking environments are changed through a machine learning technique that uses a measured temperature of an object to be heated as input data.

Embodiments also provide a device for measuring a temperature, in which a sensor for measuring a temperature expands a measurable range in a physical method.

In one embodiment, a device for measuring temperature includes: at least one array sensor configured to measure a temperature of at least a portion of a surface of an object to be heated, which is heated by a cooking appliance; and a controller configured to acquire a temperature change rate depending on the measured temperature and acquire a surface material of the object to be heated, based on the temperature chamber rate.

The controller may be configured to measure the temperature of at least the portion of the surface of the object to be heated by setting an emissivity differently depending on the surface material of the object to be heated.

The controller may be configured to: measure a temperature of the object to be heated by setting the emissivity to a first emissivity when the surface of the object to be heated is a matte material; and measure a temperature of the object to be heated by the emissivity to a second emissivity less than the first emissivity when the surface of the object to be heated is a glossy material.

The controller may be configured to acquire types of object to be heated, based on a height of an area, in which a temperature change amount is equal to or greater than a preset reference amount, of the area measured by the array sensor.

The controller may be configured to: acquire the type of object to be heated as a first container when the height of the area, in which the temperature change amount is equal to or greater than the preset reference amount, is equal to or greater than a preset reference height; and acquire the type of object to be heated as a second container when the height of the area, in which the temperature change amount is equal to or greater than the preset reference amount, is less than the reference height. The first container may include a container having a height equal to or greater than the preset reference height, and the second container may include a container having a height less than the preset reference height.

The controller may be configured to acquire a temperature of a load based on a temperature of a side surface of the surface of the object to be heated when the type of object to be heated comprises a pot.

The controller may be configured to acquire a temperature of a load based on temperatures of a side surface and a bottom surface of the surface of the object to be heated when the type of object to be heated comprises a frying pan.

The controller may be configured to acquire a volume of a load in the object to be heated, based on a height of an area, in which a temperature change amount is equal to or greater than a preset reference value, of the area measured by the array sensor.

A horizontal length of a sensing range of the array sensor may be equal to or less than a horizontal length of the object to be heated, and a vertical length of the sensing range may be equal to or greater than a vertical length of the object to be heated.

The device may further include an output interface configured to output a content corresponding to a state of a load in the object to be heated among contents received from a server.

The controller may be configured to output an alarm through the output interface or transmit an alarm output signal to an external device when the temperature of the load reaches a preset reference temperature.

The controller may be configured to acquire a state of a load, which comprises a temperature of the load in the object to be heated, based on at least one load state estimation model received from a server, wherein the load state estimation model may include a model that outputs the state of the load when the temperature of at least the portion of the surface of the object to be heated, which is measured by the array sensor, is input.

The controller may be configured to receive a plurality of load state estimation models from the server and output the state of the load by using one of the plurality of load state estimation models, based on information on the object to be heated.

The array sensor may be provided to be inclined so that at least a portion of the object to be heated and a heating portion provided in the cooking appliance are disposed within a sensing range, and the controller may be configured to acquire a temperature of a load in the object to be heated, based on temperatures of the object to be heated and the heating portion, which are measured by the array sensor.

The details of one or more embodiments are set forth in the accompanying drawings and the description below. Other features will be apparent from the description and drawings, and from the claims.

## BRIEF DESCRIPTION OF THE DRAWINGS

FIG. 1 is a perspective view illustrating a device for measuring a temperature according to an embodiment of the present disclosure.

FIG. 2 is a block diagram illustrating a device for measuring a temperature, an object to be heated, a cooking appliance that heats the object to be heated, an external device, and a server according to an embodiment of the present disclosure.

FIG. 3 is a view illustrating a state in which the device for measuring the temperature provides a guide for guiding a position at which the heating portion is concentrically disposed.

FIG. 4 is a top view illustrating a state in which the object to be heated is concentrically disposed with the heating portion.

FIG. 5 is a top view illustrating a state in which the object to be heated is eccentrically disposed with the heating portion.

FIG. 6 is a side cross-sectional view illustrating a state in which an array sensor of the device for measuring the temperature is inclined according to an embodiment of the present disclosure.

FIG. 7 is a flowchart illustrating a process of acquiring information of an object to be heated through a device for measuring a temperature according to an embodiment of the present disclosure.

FIG. 8 is a side cross-sectional view illustrating a state in which first and second containers are heated by a cooking appliance.

FIG. 9 is a side cross-sectional view illustrating a state in which a load is contained in the first container.

FIG. 10 is a side cross-sectional view illustrating a state in which a load is contained in the second container.

FIG. 11 is a table illustrating data obtained by measuring a temperature of at least a portion of a surface of the object to be heated according to emissivity set in the device for measuring the temperature and a temperature measured according to actual emissivity when the surface material of the object to be heated is matte.

FIG. 12 is a table illustrating data obtained by measuring a temperature of at least a portion of a surface of the object to be heated according to emissivity set in the device for measuring the temperature, actual emissivity, and an actual temperature when the surface material of the object to be heated is glossy.

FIG. 13 is a flowchart illustrating a method for generating a load state estimation model and a method for updating the load state estimation model according to an embodiment of the present disclosure.

FIG. 14 is a graph illustrating a difference between temperature data estimated using the load state estimation module and test data under first and second cooking environments.

FIG. 15 is a graph illustrating data obtained by estimating a temperature of the load according to a time and test data before the load information model is updated.

FIG. 16 is a graph illustrating data obtained by estimating a temperature of the load according to a time and test data after the load information model is updated.

## DETAILED DESCRIPTION OF THE EMBODIMENTS

Hereinafter, embodiments relating to the present disclosure will be described in detail with reference to the accompanying drawings. Furthermore, terms, such as a "module" and a "unit", are used for convenience of description, and they do not have different meanings or functions in themselves.

Hereinafter, a device for measuring a temperature according to an embodiment of the present disclosure will be described.

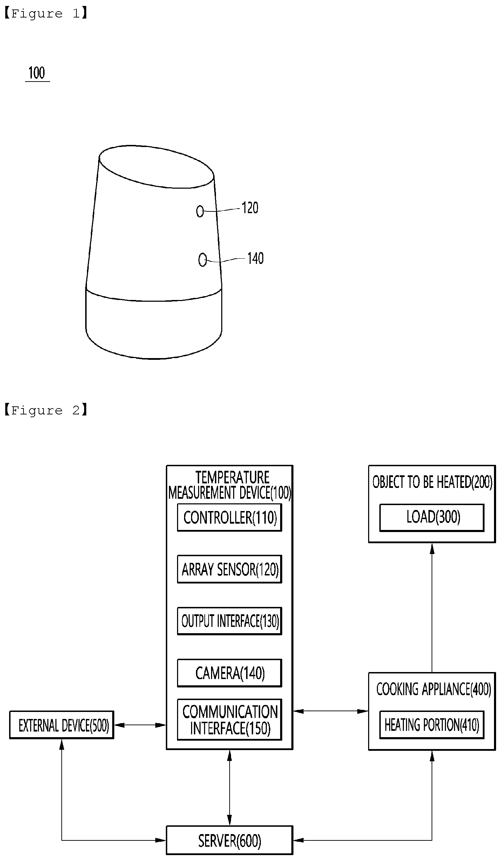

FIG. 1 is a perspective view illustrating a device for measuring a temperature according to an embodiment of the present disclosure. FIG. 2 is a block diagram illustrating a device for measuring a temperature, an object to be heated, a cooking appliance that heats the object to be heated, an external device, and a server according to an embodiment of the present disclosure.

A device for measuring a temperature 100 (hereinafter, referred to as a temperature measurement device 100) may include at least some or all of a controller 110, an array sensor 120, an output interface 130, a camera 140, and a communication interface 150.

An object to be heated 200 (hereinafter, referred to as a heated object 200) may be a cooking container. That is, the heated object 200 may include a load 300 such as food. The heated object 200 may be heated by a cooking appliance 400, and heat may be transferred to the load 300 to heat the load 300.

The type of heated object 200 may vary, such as a pot or a frying pan, depending on the cooking purpose, shape, etc.

The cooking appliance 400 may include all cooking appliances for heating the heated object 200. For this, the cooking appliance 400 may include a heating portion 410. For example, the cooking appliance 400 may be an induction heating-type cooktop (not shown). The induction heating type cooktop (not shown) may heat the heated object 200 using magnetic fields generated from a working coil. The heating portion 410 may be disposed vertically above the working coil of the induction heating type cooktop (not shown) . Thus, the heated object 200 may be disposed on an upper portion of the heating portion 410 and heated by the heating portion 410. In addition, the cooking appliance 400 may include a communication interface (not shown) capable of communicating with the outside.

An external device 500 may include a mobile terminal (not shown) such as a smartphone, laptop, PC, or tablet PC, various home appliances such as a TV, or an external speaker (not shown). The external speaker (not shown) may be an artificial intelligence speaker.

A server 600 may be a database that stores at least some of a load information estimation model and a recipe. The server 600 may store operation profiles of the cooking appliance, which include a temperature of the heated object 200, an output of the cooking appliance 400, a time for which the cooking appliance 400 is operated.

In addition, the server 600 may exchange information related to cooking environments with the temperature measurement device 100, the cooking appliance 400, and the external device 500. The server 600, the temperature measurement device 100, the cooking appliance 400, and the external device 500 may be connected through wireless communication such as Wi-Fi to transmit and receive the information. In addition, the server 600 may be further connected to various home appliances such as a water purifier, a refrigerator, and an air purifier to provide various connection services.

Next, a configuration of the temperature measurement device 100 will be described in detail.

The controller 110 may control an overall operation of the temperature measurement device 100.

The array sensor 120 may be a multi-pixel IR sensor. The array sensor 120 may measure a temperature of an object of which a temperature is to be measured in an area unit rather than a point unit by using infrared rays. That is, the array sensor 120 may measure a temperature of at least a portion of the surface of the heated object 200 heated by the cooking appliance 400.

Specifically, the sensing range in which the array sensor 120 measures the temperature may have horizontal and vertical viewing angles. For example, the array sensor 120 may have a vertical viewing angle of about 55° and a horizontal viewing angle of about 35°.

Alternatively, the sensing range of the array sensor 120 may have a plurality of pixels in a vertical direction and a plurality of pixels in a horizontal direction. For example, the array sensor 120 may have 32 pixels in the vertical direction and 24 pixels in the horizontal direction, and thus have a total of 768 pixels.

The array sensor 120 may have a horizontal viewing angle and the number of pixels in the horizontal direction, in which the temperature is measured in a range that is less than a horizontal length of the heated object 200, such as the cooking container. That is, the horizontal length of the sensing range of the array sensor 120 may be less than or equal to the horizontal length of the heated object 200. When measuring the temperature in the range of the horizontal length greater than the horizontal length of the heated object 200, it may be difficult to accurately measure the temperature because of being affected by the other heating portion adjacent to the heating portion 410 on which the heated object 200 is disposed.

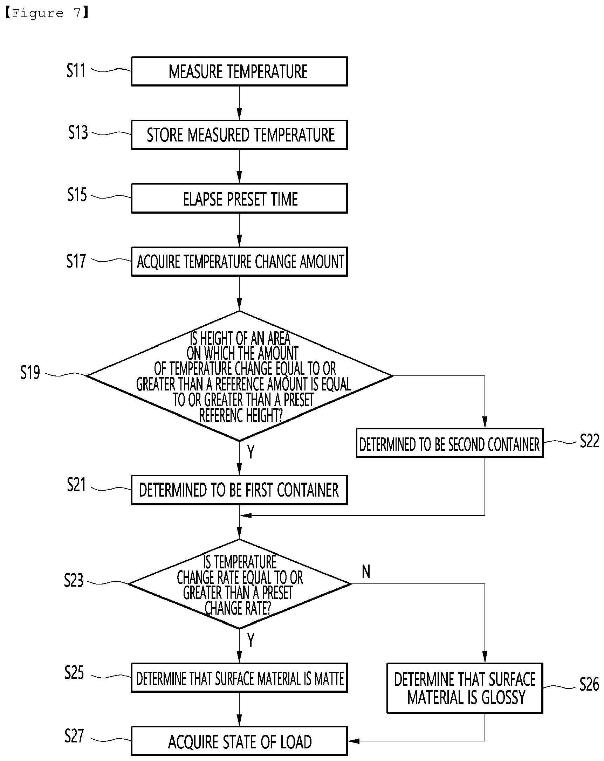

In addition, the array sensor 120 may have a vertical viewing angle and the number of pixels in the vertical direction, in which the temperature is measured in a range that is greater than a height of the heated object 200, such as the cooking container. That is, the vertical length of the sensing range of the array sensor 120 may be greater than or equal to the vertical length of the heated object 200. This is because, as described later in FIG. 7, the temperature of the load 300 may be accurately acquired by measuring a temperature in an entire height of the heated object 200.

In summary, the horizontal length of the sensing range of the array sensor 120 may be less than or equal to the horizontal length of the heated object 200, and the vertical length of the sensing range may be greater than or equal to the vertical length of the heated object 200.

The output interface 130 may output information related to an operation of the temperature measurement device 100. The output interface 130 may include at least one of a speaker (not shown) for audibly outputting the information related to the temperature measurement device 100, or an LED lamp (not shown) for visually outputting the information related to the temperature measurement device 100, or a display (not shown). The output interface 130 may output content corresponding to a state of the load 300 contained in the heated object among the recipe contents received from the server 600. Specifically, the controller 110 may output an alarm through the output interface 130 when the temperature of the load 300 reaches a preset reference temperature. For example, if the recipe includes a content in which other cooking ingredients are added when the load 300 reaches about 100°C, the output interface 130 may output a message that informs adding of other cooking ingredients when the temperature of the load 300 reaches about 100°C.

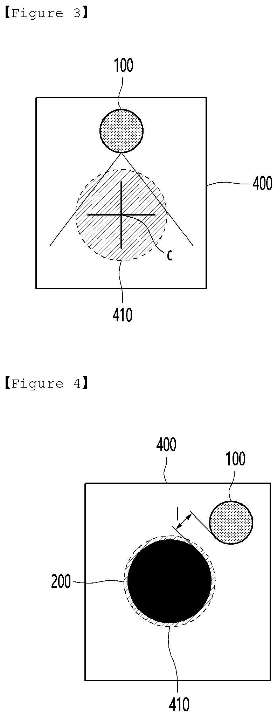

In addition, the output interface 130 may include a laser (not shown). The laser (not shown) may display a guide, which guides a position at which a center of the heated object 200 and a center of the heating portion 410 vertically coincide with each other, on an upper plate portion (not shown) of the cooking appliance by using laser light. That is, the laser (not shown) may visually provide the guide to guide the heated object 200 and the heating portion 410 to a central position. Since at least a portion of the heated object 200 is deviated from the sensing range of the array sensor 120 according to a degree to which the heated object 200 is eccentrically disposed with respect to the heating portion 410, the laser (not shown) may provide a guide so that the heated object 200 is concentrically with the heating portion 410 so as to be disposed within the sensing range of the array sensor 120. In relation to this, it will be described later with reference to FIG. 3.

The camera 140 may photograph the heated object 200. An image of the heated object 200 photographed by the camera may be thermally processed by the controller 110 and used to acquire the temperature of the heated object 200.

The communication interface 150 may communicate with at least some of the server 600, the cooking appliance 400, and the external device 500.

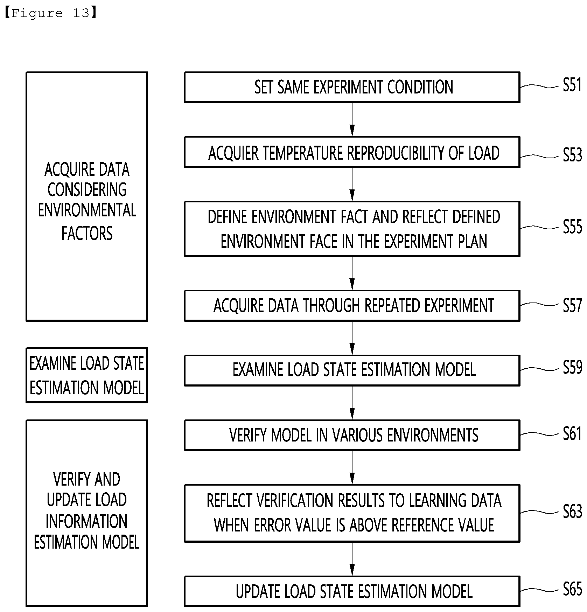

The communication interface 150 may receive a load state estimation model from the server 600. The load state estimation model may be a model that outputs a state of the load 300 including the temperature of the load 300 when the temperature of at least a portion of the surface of the heated object 200 measured by the array sensor 120 is input. Thus, the controller 110 may acquire the state of the load 300 contained in the heated object 200 based on at least one load state estimation model received from the server 600. The state of the load 300 may include at least a portion of a temperature and volume of the load 300. The load state estimation model will be described later with reference to FIG. 13.

The controller 110 may transmit a signal for outputting a content corresponding to the state of the load 300 contained in the heated object among the recipe contents received from the serve 600 to the external device 500 through the communication interface 150. Thus, the external device 500 may output content corresponding to a state of the load 300 included in the heated object among the recipe contents received from the server 600. That is, the recipe content corresponding to the state of the load 300 may be output not only from the temperature measurement device 100 but also from the external device 500. Thus, the user may check the recipe content corresponding to the state of the load 300 at a position that is away from the temperature measurement device 100.

The communication interface 150 may communicate with the cooking appliance 400. For this, the cooking appliance 400 may include a wireless communication module.

The temperature measurement device 100 according to an embodiment of the present disclosure may provide various services by being interlocked with the cooking appliance 400 and the external device 500.

First, the external device 500 may include a mobile terminal.

The external device 500 may scan a barcode of a food packaging and transmit the barcode to the server 600.

In addition, the external device 500 may designate the temperature measurement device 100 and the cooking appliance 400 that provide the interlocked services to the user. The external device 500 may control the temperature measurement device 100 and the cooking appliance 400, which are designated to provide the interlocked services.

The cooking appliance 400 may receive information related to a target output for each process of the recipe and the time to start each process of the recipe from the server 600. Thus, the output of the cooking appliance 400 may be automatically adjusted for each process of the recipe.

In addition, the cooking appliance 400 may transmit information related to an operation of the cooking appliance 400 to the server 600. The information related to the operation of the cooking appliance 400 may include at least a portion of the output and operation time of the cooking appliance 400.

The temperature measurement device 100 may receive a control signal from the server 600 when the external device 500 transmits a signal for controlling the temperature measurement device 100 to the server 600. Thus, the temperature measurement device 100 may be operated by a user input to the external device 500.

In addition, the temperature measurement device 100 may receive a recipe corresponding to the barcode from the server 600. The temperature measurement device 100 may use a microphone (not shown) to output a voice guide for informing contents of the received recipe to the user.

The temperature measurement device 100 may detect the cooking environment using the array sensor 120 or the camera 140 and may transmit information related to the cooking environment to the server 600. The information related to the cooking environment may include at least some of whether the output of the cooking appliance 400 is higher than the target output, whether the user is absent, and a degree of surrounding air pollution measured by an air quality sensor (not shown). The information related to the cooking environment transmitted from the temperature measurement device 100 to the server 600 may be transmitted again to the external device 500 and be output from the external device 500.

In addition, the temperature measurement device 100 may exchange temperature sensing control information with the cooking appliance 400. The temperature sensing control information may include at least some of the control signal received from the external device 500, the target output of the cooking appliance 400 for each process of the recipe received from the server 600, and the output of the cooking appliance 400 in operation.

That is, the temperature measurement device 100 according to an embodiment of the present disclosure may not only measure the temperature of the heated object 200, but also be connected to at least some of the cooking appliance 400, the external device 500, and the server 600 to provide the voice guide that guides the recipe content or monitor the cooking environment.

It is important that the temperature measurement device 100 according to an embodiment of the present disclosure measures a temperature of at least a portion of the surface of the heated object 200 to acquire the temperature of the load 300 based on the measured temperature, thereby accurately measuring the temperature of the surface of the heated object 200.

A center of the heated object 200 may disposed to coincide with a center of the heating portion 410 in the vertical direction. That is, the heated object 200 and the heating portion 410 may be concentrically disposed with respect to each other. When the heated object 200 and the heating portion 410 are concentrically disposed with respect to each other, a contact area between the heated object 200 and the heating portion 410 may be large, and heating efficiency may be maximized.

However, at least a portion of the heated object 200 may be derived from the sensing range of the array sensor 120, or a distance between the heated object 200 and the array sensor 120 may be different according to the degree to which the heated object 200 is eccentric with the heating portion 410, and thus, the array sensor 120 may not accurately measure the temperature of the surface of the heated object 200.

Thus, the temperature measurement device 100 according to an embodiment of the present disclosure may provide a guide that guides the heated object 200 and the heating portion 410 so as to be concentrically disposed with respect to each other.

In relation to this, it will be described with reference to FIG. 3.

FIG. 3 is a view illustrating a state in which the device for measuring the temperature provides the guide for guiding the position at which the heating portion is concentrically disposed.

Referring to the example of FIG. 3, a center c of the heating portion may be indicated using a cross mark. The laser (not shown) included in the temperature measurement device 100 may display the guide for guiding the position of the heating portion 410 using the laser light. The guide may include a movement direction and movement distance in which the heated object 200 has to move to be disposed at the center c of the heating portion. For example, the guide may have a variety of shapes, such as a straight line, an arrow, or a cross mark indicating the center c of the heating portion.

Thus, the user may intuitively know that the heated object 200 and the heating portion 410 are eccentrically disposed with respect to each other, and thus, there is an advantage in that the heated object 200 and the heating portion 410 are concentrically disposed with respect to each other.

The heated object 200 and the heating portion 410 may not always be concentrically disposed with respect to each other. For example, the heated object 200 may be pushed during the cooking process, or the centers of the heated object 200 and the heating portion 410 may be offset in the vertical direction due to lack of a cooking space and thus is eccentrically disposed with respect to each other. The distance between the heated object 200 and the heating portion 410 may be different when the heated object 200 and the heating portion 410 are eccentrically disposed with respect to each other and eccentrically with each other. In addition, at least some of the heated objects 200 may be deviated from the sensing range of the array sensor 120. Thus, there is a risk that the accuracy of the temperature of the surface of the heated object 200 measured by the array sensor 120 is deteriorated.

For this, the temperature measurement device 100 according to an embodiment of the present disclosure may be a temperature measurement device that is capable of moving according to the position at which the heated object 200, such as the cooking container, is disposed.

That is, the temperature measurement device 100 according to an embodiment of the present disclosure may provide an independently movable temperature measurement device 100, which does not need to be provided in the cooking appliance 400 itself, to provide the temperature measurement device 100 that accurately measures the temperature even when the heated object 200 and the heating portion 410 are eccentrically disposed with respect to each other.

Specifically, it will be described with reference to FIGS. 4 to 5.

FIG. 4 is a top view illustrating a state in which the object to be heated is concentrically disposed with the heating portion.

When the centers of the heated object 200 and the heating portion 410 coincide in the vertical direction, the temperature measurement device 100 may be disposed with a spaced distance l from the heated object 200.

The spaced distance l may be an optimized distance for measuring a distance of at least a portion of the surface of the heated object 200. The spaced distance l may be a distance considering the sensing range or performance of the array sensor 120.

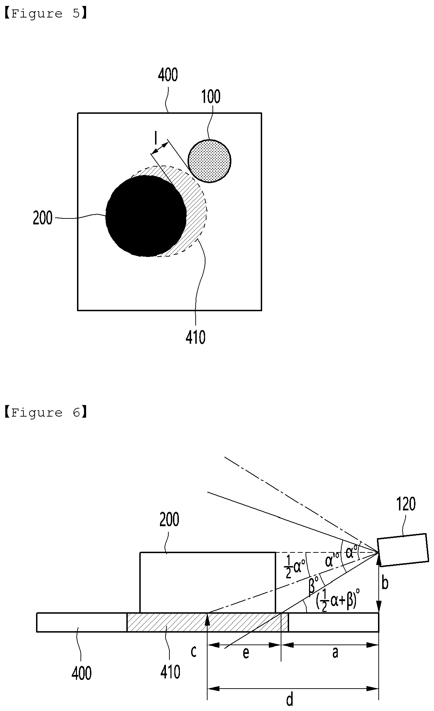

FIG. 5 is a top view illustrating a state in which the object to be heated is eccentrically disposed with the heating portion.

Referring to the example of FIG. 5, even when the centers of the heated object 200 and the heating portion 410 do not coincide in the vertical direction, the temperature measurement device 100 may be disposed with a spaced distance l from the heated object 200. That is, the temperature measurement device 100 may move based on the degree of eccentricity of the heated object 200 and the heating portion 410.

The temperature measurement device 100 according to an embodiment of the present disclosure may be a mobile temperature measurement device that is not included in or fixed to the cooking appliance 400 and is disposed differently depending on the arrangement of the heated object 200. For this, the temperature measurement device 100 may include a battery (not shown) that supplies power to the temperature measurement device 100.

The temperature measurement device 100 according to an embodiment of the present disclosure may move to have the spaced distance l when the heated object 200 and the heating portion 410 are eccentrically disposed with respect to each other, and thus, there is an advantage in that the temperature of the surface of the heated object 200 is accurately measured compared to a case in which the temperature measurement device 100 is fixed.

As another method for accurately acquiring the temperature of the load 300 when the heated object 200 and the heating portion 410 are eccentrically disposed with respect to each other, there is a method for reflecting the temperature of the heating portion 410 in the process of acquiring the temperature of the load 300. For example, the array sensor 120 may measure a temperature of an area including a portion at which the heated object 200 and the heating portion 410 are in contact with each other. The controller 110 may calculate a correction coefficient according to the distance between the temperature measurement device 100 and the heated object 200 to acquire the temperature of the area including the portion at which the heated object 200 and the heating portion 410 are in contact with each other and the temperature of the load 300. Thereafter, the controller 110 may obtain the temperature of the load 300 using the temperature of the area including the portion at which the heated object 200 and the heating portion 410 are in contact with each other and the correction coefficient.

However, in the method of acquiring the temperature of the load 300 only based on the temperature of the area including the portion at which the heated object 200 and the heating portion 410 are in contact with each other and the distance from the heated object 200, since the temperature of each of the heated object 200 and the heating portion 410 are not acquired, it may not be possible to consider a case in which the emissivity of the surface of the heated object 200 is different due to a decrease in surface gloss due to continuous use of the heated object 200. Since the array sensor 120 is an IR sensor that uses infrared rays, an actual temperature and a measured temperature of an object may be different from each other according to the emissivity of the surface of the object. Thus, there is a limitation that the accuracy of the temperature of the load 300 provided by the temperature measurement device 100 based on the temperature of the heated object 200 may be reduced.

In addition, since the temperature of the heated object 200 is not measured separately from the temperature of the heating portion 410, a volume of the load 300 contained in the heated object 200 may not be provided.

Thus, the temperature measurement device 100 according to an embodiment of the present disclosure intends to measure the temperature of the surface of the heated object 200 and the temperature of the heating portion 410 regardless of a diameter of the heated object 200 and a degree to which the heated object 200 and the heating portion 410 are eccentrically disposed with respect to each other.

In relation to this, it will be described in detail with reference to FIG. 6.

FIG. 6 is a side cross-sectional view illustrating a state in which the array sensor of the device for measuring the temperature is inclined according to an embodiment of the present disclosure.

First, the temperature measurement device 100 according to an embodiment of the present disclosure intends to include both the heated object 200 and the heating portion 410 within the vertical sensing range of the array sensor 120. However, since a portion or whole of the heating portion 410 may be covered by the heated object 200, the array sensor 120 may not be able to measure the temperature of the heating portion 410 according to the size of the heated object or the degree to which the heated object 200 and the heating portion 410 are eccentrically disposed with respect to each other. Thus, an angle of the array sensor 120 may be adjusted to be tilted according to the size of the heated object 200 or the degree to which the heated object 200 and the heating portion 410 are eccentrically disposed with respect to each other. The temperature measurement device 100 may include an angle adjustment portion (not shown) that adjusts the angle of the array sensor 120.

Before the array sensor 120 is tilted, the array sensor 120 may have a vertical sensing range within a vertical viewing angle $\alpha°$.

A portion of the surface of the heated object 200 may be included within the vertical viewing angle $\alpha°$ of the array sensor 120. That is, a height b at which the array sensor 120 is disposed may be a height considering the height of the heated object 200.

Specifically, the array sensor 120 may be disposed at a height of about 30 mm or more from the bottom by assuming that a minimum height of the heated object 200 is about 30 mm. If the array sensor 120 is disposed at a height lower than the height of the heated object 200 with the minimum height, it may not sufficiently cover the vertical range of the surface of the heated object 200 with a maximum height. However, this is only an example, and the height at which the array sensor 120 is disposed may not be limited to about 30 mm and may vary depending on the heated object 200 used for cooking and the cooking environment.

Before the array sensor 120 is tilted, a lower boundary of the vertical viewing angle $\alpha°$ may be directed toward the center c of the heating portion. Thus, the array sensor 120 may not measure the temperature of the heating portion 410 when the heated object 200 is disposed to block the center c of the heating portion.

As a result, the array sensor 120 according to an embodiment of the present disclosure is tilted to be adjusted so as to measure the temperature of at least a portion of the surface of the heated object 200 and the heating portion 410.

For example in FIG. 6, at least a portion of the surface of the heated object 200 and the heating portion 410 may be included within the sensing range within a vertical viewing angle $\alpha'°$ after the array sensor 120 is tilted.

The array sensor 120 may be tilted by a tilt angle $\beta°$ compared to before being tilted. Next, the tilt angle $\beta°$ will be described in detail.

The tilt angle $\beta°$ may be derived by [Equation 1] to [Equation 4] below.

[Equation 1]

$$\tan\left(\frac{1}{2}\alpha° + \beta°\right) = \frac{b}{a}$$

[Equation 2]

$$\tan^{-1}\left(\frac{b}{a}\right) = \frac{1}{2}\alpha^\circ + \beta^\circ$$

[Equation 3]

$$\beta^\circ = \tan^{-1}\left(\frac{b}{a}\right) - \frac{1}{2}\alpha^\circ$$

Since a=d-e, [Equation 4] below may be derived from [Equation 3].

[Equation 4]

$$\beta^\circ = \tan^{-1}\left(\frac{b}{d-e}\right) - \frac{1}{2}\alpha^\circ$$

That is, the tilt angle β° may be acquired based on the vertical viewing angle α° before the array sensor 120 is tilted, the height b at which the ray sensor 120 is disposed, the distance d between the center of the heating portion c and the array sensor 120, and the distance e between the point, at which the lower boundary of the vertical angle of view α'° after the array sensor 120 is tilted is in contact with the heating portion 410, and the center of the heating portion 410.

When the heated object 200 is concentrically disposed with respect to the heating portion 410, the distance e between the point, at which the lower boundary of the vertical angle of view α'° after the array sensor 120 is tilted is in contact with the heating portion 410 may be greater than about 1/2 of the diameter of the heated object 200. That is, the tilt angle β° may be acquired based on the diameter of the heated object 200.

In addition, when the heated object 200 is eccentrically disposed with respect to the heating portion 410, the distance e between the point, at which the lower boundary of the vertical angle of view α'° after the array sensor 120 is tilted is in contact with the heating portion 410 may be greater than the length existing within the distance d between the center c of the heating portion and the array sensor 120 in the diameter of the heated object 200. That is, the tilt angle β° may be acquired based on the degree to which the heated object 200 is eccentrically disposed with respect to the heating portion 410.

In summarization of FIG. 6, the array sensor 120 may be adjusted to be tilted so that at least a portion of the heated object 200 and the heating portion 410 provided in the cooking appliance are disposed within the vertical sensing range based on the diameter of the heated object 200 or the degree to which the heated object 200 and the heating portion 410 are eccentrically disposed with respect to each other.

Thus, the temperature measuring device 100 according to an embodiment of the present disclosure may be used to acquire the temperature of the load 300 by measuring the temperature of each of the heated object 200 and the temperature of the heating portion 410, and thus, the accuracy may be higher than when providing the temperature of the load 300 based on only the temperature of the heated object 200 or based on the temperature of the area including the heated object 200 and the heating portion 410.

In addition, even if the center of the heated object 200 is disposed to be perpendicular to the center c of the heating portion, there is an advantage in being able to accurately acquire the temperature of the load 300 without the need to move the temperature measurement device 100 or the heated object 200.

In addition, since the temperatures of both the heated object 200 and the heating portion 410 are measured with one array sensor 120, there is no need to provide a plurality of array sensors, which is advantageous in terms of manufacturing and costs.

The temperature measurement device 100 according to an embodiment of the present disclosure may acquire a volume of the load 300 from the measured temperature of the heated object 200.

The array sensor 120 may acquire the height of the load 300 based on the temperature change of the surface of the heated object 200 and the temperature change of the heating portion 410 acquired within the sensing range. A specific method of acquiring the height of the load 300 is the same as the method described later in operation S19 of FIG. 7.

A cross-sectional area of the load 300 may be acquired from an area of a bottom surface of the heated object 200. The cross-sectional area of the heated object 200 may be acquired by a user input information related to the heated object 200. The information related to the heated object 200 may include at least portion of the type and diameter of the heated object 200.

Thus, the controller 110 may acquire the volume of the load 300 by multiplying the height of the load 300 by the cross-sectional area of the heated object 200.

The temperature measurement device 100 according to an embodiment of the present disclosure may measure a temperature of at least a portion of the surface of the heated object by reflecting the type and surface material of the heated object 200 and may accurately acquire and provide the temperature of the load 300 based on the measured temperature.

The type and surface material of the heated object 200 used to acquire the temperature of the load 300 may be acquired through the user input. However, when acquiring the type and surface material of the heated object 200 through the user input, there is a cumbersome because the user input has to be received every time the heated object 200 is changed.

Thus, with reference to FIG. 7, a method for acquiring the type and surface material of the heated object without the separate user input through the temperature measurement device 100 according to an embodiment of the present disclosure will be described.

FIG. 7 is a flowchart illustrating a process of acquiring information of the heated object through the temperature measurement device according to an embodiment.

The array sensor 120 may measure a temperature of at least a portion of the surface of the heated object 200 (S11).

The controller 110 may store the temperature measured by the array sensor 120 (S13).

The temperature measurement device 100 may include a memory (not shown), and the temperature measured by the array sensor 120 may be stored in the memory (not shown).

The controller 110 may acquire an amount of temperature change of the heated object 200 when a preset time elapses (S15).

When the preset time elapses, the controller 110 may re-measure the temperature of at least a portion of the surface of the heated object 200 and acquire the amount of temperature change by comparing the measured temperature to the temperature stored in operation S13. The amount of temperature change may be a difference between the temperature of the heated object 200 measured in operation S15 and the temperature of the heated object 200 measured in operation S13. That is, the amount of temperature change may be an amount by which the temperature of the heated object 200 is changed before and after the preset time elapses.

To acquire the type of heated object, the controller 110 may acquire whether a height of an area on which the amount of temperature change is equal to or greater than a reference amount is equal to or greater than a preset reference height (S19).

Type of heated object may include a first container 210 and a second container 220.

The first container may be a cooking container used to cook liquid dishes such as soup or stew. For example, the first container 210 may include a pot.

The second container 220 may be a cooking container used to cook solid dishes such as stir-fried dishes or fried eggs. For example, the second container 220 may include a frying pan.

Due to characteristics of dishes that are mainly cooked using each of the first container 210 and the second container 220, a height h1 of the first container may be manufactured to be higher than a height h2 of the second container.

Thus, the first container 210 and the second container 220 may be distinguished from each other by the heights. The controller 110 may determine a container of which a height is greater than or equal to the preset reference height as the first container 210 and determine a container of which a height is less than the reference height as the second container 220.

When the heated object 200 is heated by the heating portion 410, the temperature of the surface of the heated object 200 increases, and a temperature change in the heated object 200 may occur. The area having the amount of temperature change may vary depending on the height of the heated object 200.

Thus, the controller 110 may acquire the type of heated object 200 based on the height of the area, on which the amount of temperature change is equal to or greater than the preset reference amount, on the area measured by the array sensor 120.

In this regard, operations S21 to S22 will be described in detail.

The controller 110 may determine that the type of heated object 200 is the first container 210 if the height of the area on the amount of temperature change is greater than the reference amount is equal to or greater than the preset reference height (S21).

The controller 110 may determine that the type of heated object 200 is the first container 220 if the height of the area on the amount of temperature change is less than the reference amount is equal to or greater than the preset reference height (S22).

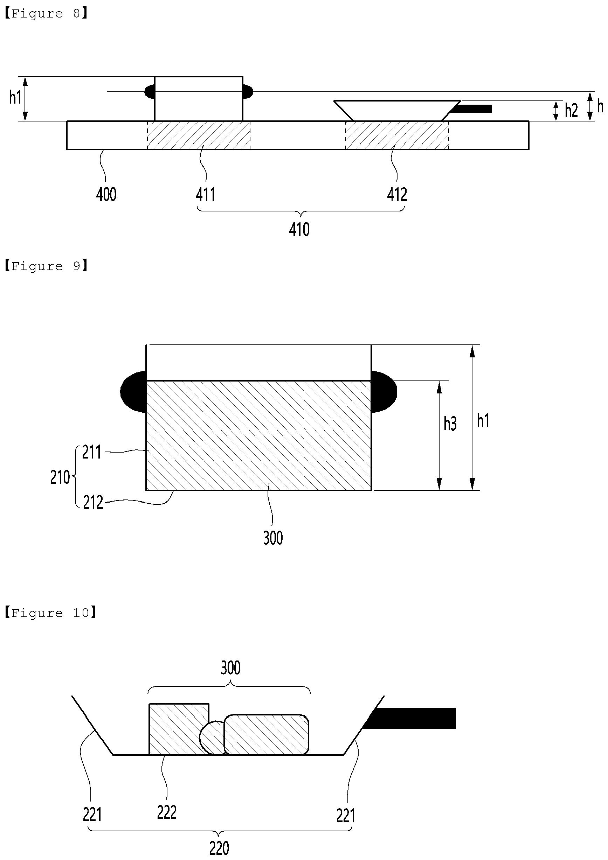

To explain operations S21 to S22, description will be made with reference to FIG. 8.

FIG. 8 is a side cross-sectional view illustrating a state in which the first and second containers are heated by the cooking appliance.

Referring to FIG. 8, the first container 210 may be disposed on a first heating portion 411, and the second container 220 may be disposed on a second heating portion 412. It is assumed that both the first heating portion 411 and the second heating portion 412 are operating.

The first container 210 may be heated by the first heating portion 411, and the temperature change in the entire area up to the height h1 of the first container may be greater than or equal to the preset reference amount. Thus, the amount of temperature change on the area above the preset reference height h may also be equal to or greater than the preset reference amount. Thus, the controller 110 may determine that the height of the area on which the amount of temperature change is greater than or equal to the preset reference amount is greater than or equal to the preset reference height h, and in this case, the type of heated object 200 may be determined as the first container.

The second container 220 may be heated by the second heating portion 412, and the amount of temperature change on the area up to the height h2 of the second container may be greater than or equal to the preset reference amount. Thus, the amount of temperature change on the area above the preset reference height h may also be less than the preset reference amount. Thus, the controller 110 may determine that the height of the area on which the amount of temperature change is less than the preset reference amount is greater than or equal to the preset reference height h, and in this case, the type of heated object 200 may be determined to be the second container 200.

Thus, the preset reference amount may be a value measured through measurement of various types of cooking containers. That is, the preset reference amount may be set as any value corresponding between an average of temperature changes measured while heating the plurality of first containers 210 and an average of temperature changes measured while heating the plurality of second containers 220.

In addition, the preset reference height h may be less than the height h1 of the first container and larger than the height h2 of the second container. That is, the preset reference height h may be set to any value corresponding between the average height of the plurality of first containers 210 and the average height of the plurality of second containers 220.

In summary, the controller 110 may acquire the type of object to be heated as the first container 210 when the height of the area, in which the temperature change amount is equal to or greater than the preset reference amount, is equal to or greater than a preset reference height and acquire the type of object to be heated as the second container 220 when the height of the area, in which the temperature change amount is equal to or greater than the preset reference amount, is less than the reference height.

Again, FIG. 7 will be described.

To acquire the surface material of the heated object 200, the controller 110 may acquire whether a temperature change rate is equal to or greater than a preset change rate (S23).

The controller 110 may calculate the temperature change rate to acquire the surface material of the heated object 200. Specifically, the controller 100 may acquire the temperature change rate according to a temperature of at least a portion of the surface of the heated object 200 and may acquire the surface material of the heated object 200 based on the temperature change rate.

The surface material of the heated object 200 may largely include glossy and matte.

An example of the glossy material is stainless steel. Stainless steel may be a material used in cooking containers as it has little corrosion and is excellent in durability and heat resistance.

Examples of matte materials may include ceramic and enamel. Ceramic may be a material used in cooking containers as it does not contain any harmful substances and has high thermal conductivity. Enamel may be a material used in cooking containers due to its high thermal conductivity and light weight.

The temperature change rate of the heated object 200 may be an amount of temperature change per unit time. Specifically, the temperature change rate of the heated object 200 may be an amount of temperature change per unit time of a side surface of the surface of the heated object 200. The temperature change rate may vary depending on emissivity of the surface material of the heated object 200. The emissivity may be a ratio of radiant heat of a material to radiant heat on a surface of an ideal black body according to Stefan-Boltzmann law at the same temperature. That is, the emissivity may have efficiency with which a material emits infrared energy.

Therefore, when a material having emissivity of about 0.95 and a material having emissivity of about 0.35 receive the same amount of heat from a heat source, the material having emissivity of about 0.95 may emit an amount of infrared energy greater than that of the material having emissivity of about 0.35, and thus, the temperature change rate may be measured to be high by the array sensor 120. That is, the higher the emissivity of the material, the higher the temperature change rate may be measured.

The emissivity may vary depending on the surface material of the heated object 200. Specifically, the emissivity may be lower for a material having higher reflectivity. That is, the higher the glossiness of the surface of the material, the lower its emissivity. That is, when the surface material of the heated object 200 is glossy, the emissivity may be lower than that when the surface material of the heated object 200 is matte, and thus, the temperature change rate may be lower than that when the surface material of the heated object 200 is matte.

Thus, the temperature change rate may be measured to be lower for a material having a higher degree of the surface glossy.

Therefore, the controller 110 may acquire that the surface of the heated object is a matte material when the temperature change rate is greater than or equal to the preset change rate (S25).

In addition, if the temperature change rate is less than the preset change rate, the controller 110 may acquire that the surface of the heated object is a glossy material (S26).

For example, the preset change rate may be the temperature change rate of the surface of the heated object 200 measured under the assumption that the emissivity of the heated object 200 is about 0.5.

Thus, if the temperature change rate of the surface of the heated object 200 is equal to or greater than the temperature change rate of the surface of the heated object 200 measured assuming that the emissivity is about 0.5, the controller 110 may determine that the surface material of the heated object 200 is matte.

On the other hand, if the temperature change rate of the surface of the heated object 200 is less than the temperature change rate of the surface of the heated object 200 measured assuming that the emissivity is about 0.5, the controller 110 may determine that the surface material of the heated object 200 is glossy.

Next, the controller 110 may acquire a state of the load 300 based on the acquired information on the heated object 200 (S27).

The information on the heated object 200 may include at least a portion or all of the type and surface material of the heated object 200. The state of the load 300 may include at least a portion or all of the temperature and volume of the load 300.

In summarization of FIG. 7, the temperature measurement device 100 according to an embodiment of the present disclosure may acquire the type of heated object based on the measured temperature change amount and the height of the area having a temperature change amount equal to or greater than the preset change amount.

In addition, the temperature measurement device 100 may acquire the surface material of the heated object 200 based on the temperature change rate of the heated object 200.

Thus, the temperature measurement device 100 may have an advantage of accurately providing the temperature of the load 300 by considering the type or material of the heated object 200 without the user input.

The controller 110 may acquire the temperature of the load 300 using at least one of the type or surface material of the heated object 200 (S27). Hereinafter, it will be described in detail.

Referring to FIG. 9, a method for acquiring the temperature of the load 300 through the controller 110 when the type of heated object 200 is the first container 210 will be described in detail.

FIG. 9 is a side cross-sectional view illustrating a state in which the load is contained in the first container.

Referring to FIG. 9, the first container 210 may include a side surface 211 and a bottom surface 212.

The load 300 may be included in the first container 210. That is, the load 300 may be contained in the first container 210. Since the first container 210 is mainly used for cooking soup, the load 300 contained in the first container 210 may be in a liquid state.

The load 300 in the liquid state may be contained in the first container 210 so as to be fully filled into the entire height h3 or less of the height h1 of the first container. Referring to the example of FIG. 9, when the height of the load contained in the first container 210 is referred to as a load height h3, the load height h3 may be less than or equal to the height h1 of the first container.

Thus, when the heating portion 410 heats the bottom surface 212 of the first container, the load 300 may be heated from below, and as the load 300 is heated, an entire area having the load height h3 on the side surface 211 of the first container may directly receive the heat from the load 300. That is, a temperature of the side surface 211 of the first container may be measured higher as the temperature of the load 300 increases. Thus, the temperature of the area having the load height h3 on the side surface 211 of the first container may be higher than the temperature of the remaining area of the side surface 211 of the first container.

Thus, when the type of heated object is the first container 210, the controller 110 may measure the temperature of the side surface 211 of the first container and acquire the temperature of the load 300 based on the measured temperature.

The controller 110 may acquire a volume of the load 300 by measuring the temperature of the side surface 211 of the first container.

The larger the volume of the load 300, the higher the load height h3 may be. Thus, the larger the volume of the load 300, the higher the height of the area on the side surface 211 of the first container that directly receives heat from the load 300.

An area higher than the load height h3 may not directly receive the heat from the load 300, but may indirectly receive the heat from the area having the load height h3. Thus, the amount of temperature change on the area higher than the load height h3 may be less than the amount of temperature change on the area having a height less than the load height h3.

Thus, the controller 110 may acquire the height of the area on which the temperature change is equal to or greater than the preset reference value as the load height h3 and may acquire the volume of the load 300 contained in the hated object based on the load height h3.

Specifically, the preset reference value may be a value equal to or greater than the amount of temperature change on the area that is higher than the load height h3 and less than the amount of temperature change on the area having the load height h3.

To acquire the volume of the load 300, not only the load height h3 but also the cross-sectional area of the load 300 may be required. The cross-sectional area of the load 300 may be acquired from the area of the bottom surface 212 of the first container. The area of the bottom surface 212 of the first container may be acquired by the user input of the information related to the first container 210, but may be stored and acquired in the memory (not shown) or received from the server 600. In addition, the area of the bottom surface 212 of the first container may be acquired through a sensor (not shown) provided in the cooking appliance 400.

When it is determined that the type of heated object 200 is the first container 210, the controller 110 may acquire a volume of the load 300 by multiplying the controller 110 may determine the area of the bottom surface 212 of the first container stored in the memory (not shown) or the area of the bottom surface 212 received from the server 600 by the area of the bottom surface 212 of the first container by the load height h3.

In summary, when the type of heated object is the first container 210, the controller 110 may acquire the volume of the load 300 by measuring at least a portion of the surface of the first container 210.

Thus, the temperature measurement device 100 according to an embodiment of the present disclosure may have an advantage of being able to acquire the volume of the load 300 without the separate user input. In addition, since the temperature of the load 300 may be obtained by reflecting the acquired volume of the load 300, there may be an advantage of accurately providing the temperature of the load 300.

Next, referring to FIG. 10, detailed descriptions will be given of how the controller 110 acquires the temperature of the load 300 when the type of heated object is the second container 220.

FIG. 10 is a side cross-sectional view illustrating a state in which the load is contained in the second container.

Referring to FIG. 10, the second container 220 may include a side surface 221 and a bottom surface 222. In addition, the load 300 may be included in the second container 220. That is, the load 300 may be contained in the second container 220. Since the second container 220 is mainly used for stir-fry cooking, the load 300 contained in the second container 220 may be in a solid state.

As illustrated in FIG. 10, the load 300 in the solid state may be contained without being in contact with the side surface 222 of the second container. Therefore, to acquire the temperature of the load 300 contained in the second container 220, measured values of a temperature of the side surface 221 and a temperature of the bottom surface 222 of the second container 220 may be used. For example, the controller 100 may acquire an average of the temperature of the side surface 221 and the temperature of the bottom surface 222 of the second container as the temperature of the load 300. Thus, the temperature of the load 300 may be acquired from the temperature of the side surface 221 and the temperature of the bottom surface 222 of the second container.

However, during the cooking process, the bottom surface 222 of the second container may be covered by the load 300, and thus, the temperature measurement may be difficult.

Therefore, the temperature measurement device 100 may acquire the temperature of the load 300 even when only the temperature of the side surface 221 of the second container is measured, by using a load information estimation model learned based on the measured temperature of the side surface 221 of the second container, the measured temperature of the bottom surface 222, and the measured temperature of the load 300.

In summarization of FIGS. 9 to 10, when the type of heated object is the first container 210, the controller 110 may assume that the load 300 is a liquid to acquire the temperature of the load 300 based on the temperature of the side surface 211 of the first container.

On the other hand, when the type of heated object is the second container 220, the load 300 may be assumed to be solid, and as a result, the temperature of the load 300 in which the temperature of the side surface 221 and the bottom 222 of the second container are considered may be acquired.

Thus, the temperature measurement device 100 according to an embodiment of the present disclosure may accurately provide the temperature of the load 300 by subdividing the method of acquiring the temperature of the load 300 according to the type of heated object.

Next, the temperature measurement device 100 according to an embodiment of the present disclosure may acquire the temperature of the heated object 200 based on the surface material of the heated object. A method for setting emissivity for measuring the temperature of the heated object 200 based on the surface material of the heated object will be described.

First, descriptions will be given regarding the case in which the surface material of the heated object 200 is matte.

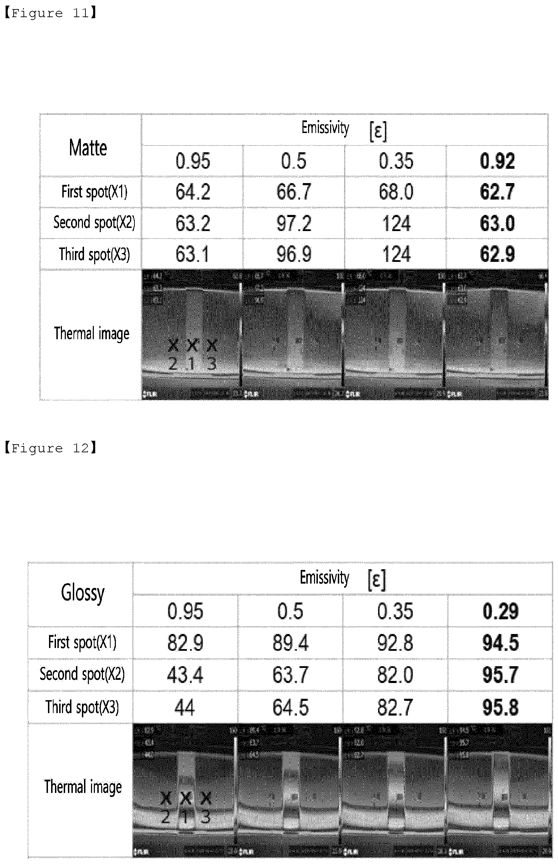

FIG. 11 is a table illustrating data obtained by measuring a temperature of at least a portion of a surface of the heated object according to emissivity set in the temperature measurement device and a temperature measured according to actual emissivity when the surface material of the heated object is matte.

Table in FIG. 11 shows data obtained by measuring temperatures of a first spot X1, a second spot X2, and a third spot X3 of the heated object 200 when the surface material of the heated object is matte, and emissivity ε of the temperature measurement device 100 is set to about 0.95, about 0.5 and about 0.35, respectively.

In addition, the table in FIG. 11 shows data obtained by measuring temperatures of the first spot X1, the second spot X2, and the third spot X3 of the heated object 200 having the actual emissivity of about 0.92. The temperatures of the first spot X1, the second spot X2, and the third spot X3 of the heated object 200 having the actual emissivity of about 0.92 may be actual temperatures of the first spot X1, the second spot X2, and the third spot X3.

Referring to the data related to the first spot X1, the temperature measured according to the actual emissivity of the heated object 200 is about 62.7°. When the emissivity ε of the temperature measurement device 100 is set to about 0.95, the temperature of the first spot X1 is measured at about 64.2°, which is about 1.5° higher than the temperature measured according to the actual emissivity. When the emissivity ε of the temperature measurement device 100 is set to about 0.5, the temperature of the first spot X1 is measured at about 66.7°, which is about 4° higher than the temperature measured according to the actual emissivity. When the emissivity ε of the temperature measurement device 100 is set to about 0.35, the temperature of the first spot X1 is measured at about 68.0°, which is about 5.3° higher than the temperature measured according to the actual emissivity.

That is, if the surface material of the heated object 200 is matte, the temperature of the first spot X1 measured by setting the emissivity ε of the temperature measuring device 100 to about 0.95 that is the highest among about 0.95, about 0.5, and about 0.35, is closest to the temperature of the first spot X1 measured according to the actual emissivity of about 0.92.

In addition, the temperatures of the second spot X2 and third spot X3, which are measured by setting the emissivity ε of the temperature measuring device 100 to about 0.95 that is the highest among about 0.95, about 0.5, and about 0.35 is also closest to the temperature of each of the second spot X2 and the third spot X3, which are measured according to the actual emissivity of about 0.92.

Next, descriptions will be given regarding the case where the surface material of the heated object 200 is glossy.

FIG. 12 is a table illustrating data obtained by measuring a temperature of at least a portion of a surface of the heated object according to emissivity set in the temperature measurement device, actual emissivity, and an actual temperature when the surface material of the heated object is glossy.

FIG. 12 illustrates data obtained by measuring temperatures of a first spot X1, a second spot X2, and a third spot X3 of the heated object 200 when the surface material of the heated object is glossy, and emissivity ε of the temperature measurement device 100 is set to about 0.95, about 0.5 and about 0.35, respectively.

In addition, the table in FIG. 11 shows data obtained by measuring temperatures of the first spot X1, the second spot X2, and the third spot X3 according to the actual emissivity of about 0.29. The temperatures of the first spot X1, the second spot X2, and the third spot X3 of the heated object 200 having the actual emissivity of about 0.29 may be actual temperatures of the first spot X1, the second spot X2, and the third spot X3.

Referring to the data related to the first spot X1, the temperature measured according to the actual emissivity of the heated object 200 is about 94.5°. When the emissivity ε of the temperature measurement device 100 is set to about 0.95, the temperature of the first spot X1 is measured at about 82.9°, which is about 11.6° higher than the temperature measured according to the actual emissivity. When the emissivity ε of the temperature measurement device 100 is set to about 0.5, the temperature of the first spot X1 is measured at about 89.4°, which is about 5.1° higher than the temperature measured according to the actual emissivity. When the emissivity ε of the temperature measurement device 100 is set to about 0.35, the temperature of the first spot X1 is measured at about 92.8°, which is about 1.7° higher than the temperature measured according to the actual emissivity.

That is, if the surface material of the heated object 200 is glossy, the temperature of the first spot X1 measured by setting the emissivity ε of the temperature measuring device 100 to about 0.35 that is the lowest among about 0.95, about 0.5, and about 0.35, is closest to the temperature of the first spot X1 measured according to the actual emissivity of about 0.29.

In addition, the temperatures of the second spot X2 and third spot X3, which are measured by setting the emissivity ε of the temperature measuring device 100 to about 0.35 that is the lowest among about 0.95, about 0.5, and about 0.35 is also closest to the temperature of each of the second spot X2 and the third spot X3, which are measured according to the actual emissivity of about 0.35.

Referring to FIGS. 11 and 12, it is seen that the temperature of the surface of the heated object 200 having a glossy surface material is accurately measured only when the emissivity is set lower than that when measuring the temperature of the surface of the heated object 200 having a matte surface material.

Thus, the temperature measurement device 100 according to an embodiment of the present disclosure may set the emissivity ε differently according to the surface material of the heated object 200 to acquire a temperature of at least a portion of the surface of the heated object 200.

More specifically, when the surface of the heated object 200 is made of the matte material, the controller 110 may measure the temperature of the heated object 200 by setting the emissivity ε as first emissivity. In addition, when the surface of the heated object 200 is made of the glossy material, the controller 110 may set the emissivity $\varepsilon$ to second emissivity lower than the first emissivity to measure the temperature of the heated object 200.

Thus, the temperature measurement device 100 according to an embodiment of the present disclosure may accurately measure the temperature of the heated object 200 in consideration of the surface material of the heated object to accurately measure the temperature of the load 300 from the temperature of the heated object 200.

Next, with reference to FIG. 13, a load state estimation model used by the temperature measurement device 100 according to an embodiment of the present disclosure to provide the temperature of the load 300 will be described.

FIG. 13 is a flowchart illustrating a method for generating a load state estimation model and a method for updating the load state estimation model according to an embodiment of the present disclosure.

The load state estimation model may be a machine learning model that estimates the temperature of the load 300 using the temperature of the heated object 200. In addition, the load state estimation model may be a machine learning model learned using a random forest method, but is not limited thereto.

First, with reference to operations S51 to S57, a method for acquiring data used for learning and verifying the load state estimation model will be described.

Some of the data obtained in operations S51 to S57 may be learning data used to learn the load state estimation model.

In addition, some of the remaining data obtained in operations S51 to S57 may be test data for verifying the load state estimation model.

Data may be acquired from [Equation 5] below.

[Equation 5]

$$y = f(x1, x2, x3, \dots, x768, e1, \dots, en) + e'$$

y may be a measured value of the temperature of the load 300. x1 to x768 may be temperatures of the heated object 200 measured by the array sensor 120. e1 to en may be environmental factors. e' may be an error value between a temperature of the surface of the heated object 200 measured by the array sensor 120 and a temperature of the load 300 estimated by each load state estimation model.

That is, the data used for learning and verifying the load state estimation model may include a measured temperature of the load 300, a temperature of the heated object 200 measured by the array sensor 120, environmental factors, and an error value between the temperature of the surface of the heated object 200 measured by the array sensor 120 and the temperature of the load 300 estimated by each load state estimation model. In related to each data, each operation is explained in detail.

First, the same experimental conditions may be set (S51).

The experimental conditions may include at least some of a volume of the load 300 and a degree to which a center of the heated object 200 coincides with a center of the heating portion 410. That is, data may be acquired under conditions in which the volume of the load 300 is the same, and the degree of deviation between the center of the heated object 200 and the center of the heating portion 410 is the same. For example, the data may be acquired under the condition that the volume of the load 300 is about 1L, and the center of the heated object 200 and the center of the heating portion 410 are disposed concentrically with respect to each other.

The data may include temperature data measured by the array sensor 120 under the same experimental conditions. Specifically, the data may include temperature data of each pixel measured by the array sensor 120. For example, when the array sensor 120 measures the temperature of at least a portion of the surface of the heated object 200 with a total of 768 pixels, the number of temperature data measured by the array sensor 120 acquired in one experiment may be about 768.

The experimental conditions may be set to be the same, reliability of the data may be secured.

Based on multiple experiments conducted under the same experimental conditions, reproducibility for temperature measurement of the load may be acquired (S53).

The reproducibility may be a degree to which the same experimental results are acquired regardless of who conducts the experiment. The higher the reproducibility, the higher the reliability of the experimental results.

The controller 110 may define at least one environmental factor e and reflect the defined environmental factor e in the experiment (S55).

The environmental factor e may include at least one of a volume of the load 300, a distance between the array sensor 120 and the heated object 200, a degree to which the center of the heated object 200 is misaligned with the center of the heating portion 410, or a surface material of the heated object 200. However, the environmental factor e may not be limited thereto and may be any factor that may affect the cooking environment.

The various environmental factors e may be reflected in the experiment, data reflecting various cooking environments may be acquired. That is, the load state estimation model of the present disclosure has an advantage of being able to consider the various environmental factors e than the existing load state estimation model and thus being able to estimate the temperature of the load 300 with a smaller error.

The controller 110 may acquire data through repeated experiments (S57).

The more experiments are repeated, the higher accuracy of the experiment results may be. Thus, the accuracy of the temperature of the load 300 output by the load state estimation model may be improved.

Next, the load state estimation model learned using the acquired data may be examined (S59).

There may be multiple load state estimation models developed using data. A plurality of load state estimation models may be examined, and thus, the load state estimation model having the highest accuracy may be introduced into the temperature measurement device 100.

In the process of examining the load state estimation model, the temperature of the load 300 of each of the plurality of load state estimation models, the temperature of the surface of the heated object 200 measured by the array sensor 120, and the environmental factor e may be considered to compare distribution of an error value e', which is the difference in temperature of the load 300 estimated by each load state estimation model.

A determination coefficient for each load state estimation model may be acquired according to the distribution of the error value e'. The load state estimation model having the highest coefficient of determination among the load state estimation models may be introduced into the temperature measurement device 100. The determination coefficient may refer to accuracy of the predicted temperature.

The examination of the load state estimation model may be performed under the Python development environment produced by Jupyter. For example, the load state estimation model may be examined using Jupyter Notebook. Jupyter Notebook may be a development environment used to analyze data related to data science or machine learning.

Next, the load state estimation model may be verified in various cooking environments. In addition, the load state estimation model may be updated according to the verification results.

The load state estimation model may be verified in various cooking environments (S61).

The cooking environment may vary, such as at home, a restaurant, or an outdoor, and thus, the process of acquiring the temperature of the load 300 may be affected. Therefore, the load state estimation model may be verified in various cooking environments.

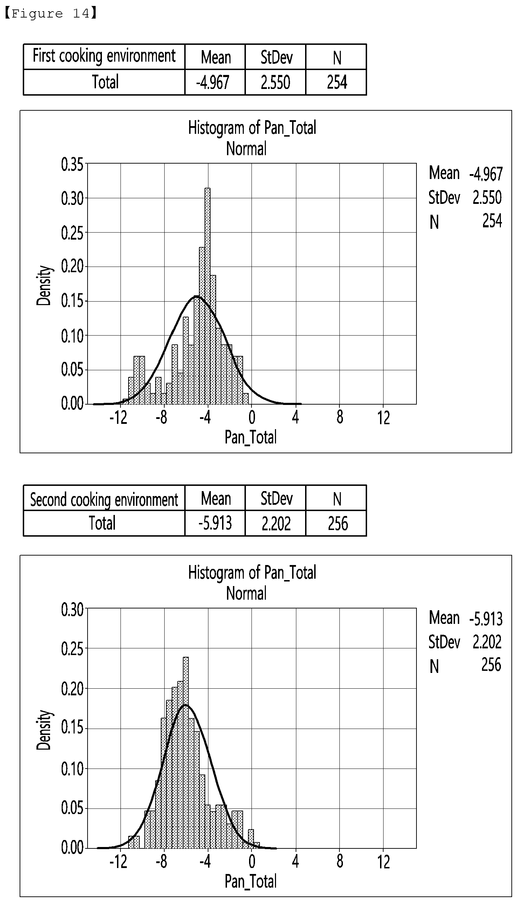

In relation to these processes, it will be described in detail with reference to FIG. 14.

FIG. 14 is a graph illustrating a difference between temperature data estimated using the load state estimation module and test data under first and second cooking environments.

Test data may be some of data obtained in operation S51. That is, the temperature of the load 300 contained in the test data may be a measured temperature of the load 300.

Referring to FIG. 14, a difference value data between the temperature data of the load 300 and the test data estimated by the load state estimation model in the first cooking environment may be about 254 (N). The mean of 254 (N) difference value data may be about -4.967, and a standard deviation (StDev) may be about 2.550.

Additionally, the difference value data between the temperature data of the load 300 and the test data estimated by the load state estimation model in the second cooking environment may be about 256 (N). The mean of 256 (N) difference value data may be about -5.913, and a standard deviation (StDev) may be about 2.202.

It is seen that the mean and standard deviation (StDev) of the difference value data acquired in the first cooking environment and the second cooking environment do not differ by more than 1. That is, it is seen that the load state estimation model consistently estimates the temperature of the load 300 in different cooking environments.

Again, FIG. 13 will be described.

Next, the load state estimation model may reflect the verification results to the learning data if the error value e' is greater than or equal to the reference value (S63).

If the error value e' is greater than or equal to the reference value, the verification results may be reflected in the learning data to reduce the error value e'.

In addition, the load state estimation model may be updated using the acquired learning data (S65).

The load state estimation model after the update may estimate and provide the temperature of the load 300 more accurately than before the update.

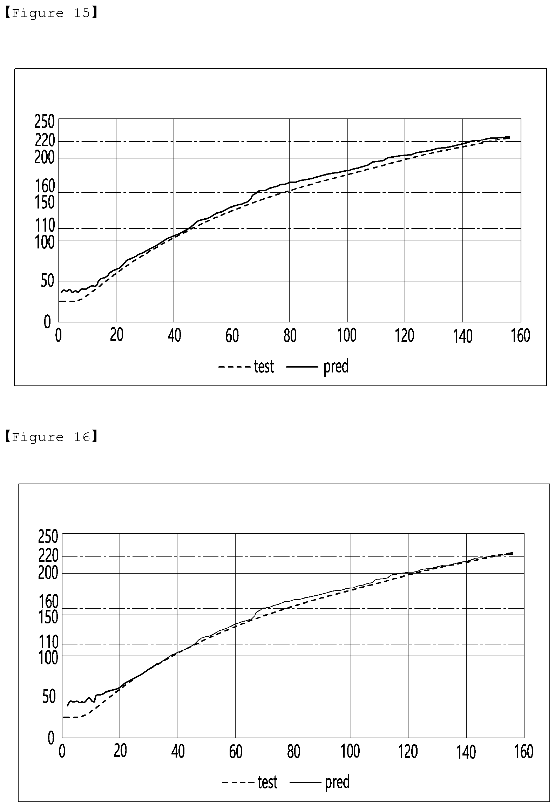

In relation to these processes, it will be described in detail with reference to FIGS. 15 and 16.

FIG. 15 is a graph illustrating data obtained by estimating a temperature of the load according to a time and test data before the load information model is updated.

Specifically, FIG. 15 illustrates a graph showing data from which the load information model estimates the temperature of the load 300 over time and test data (test) when the type of heated object 200 under the first cooking environment is the second container 220, and the surface material is matte.

To verify the load state estimation model, a time point at which the load state estimation model estimates that the temperature of the load 300 is about 120°C, about 160°C, and about 220°C and a time point at which the temperature of the load 300 in the test data (test) is measured to be about 120°C, about 160°C, and about 220°C may be compared to each other.

Referring to FIG. 15, it is seen that there is no significant difference in the time point at which the temperature of the load 300 in the temperature data (pred) estimated by the load state estimation model estimates is about 120°C and the time point at which the temperature of the load 300 in the test data (test) is about 120°C. Thus, when the load state estimation model estimates the temperature of the load 300 to be about 120°C, the temperature of the load 300 provided by the temperature measurement device 100 may be accurate.

However, it is seen that there is a difference in the time point at which the temperature of the load 300 in the temperature data (pred) estimated by the load state estimation model estimates is about 160°C and 220°C and the time point at which the temperature of the load 300 in the test data (test) is about 160°C to about 220°C. Thus, when the load state estimation model estimates the temperature of the load 300 to be about 160°C or about 220°C, the temperature of the load 300 provided by the temperature measurement device 100 may not be accurate.

FIG. 16 is a graph illustrating data obtained by estimating a temperature of the load according to a time and test data after the load information model is updated.

As illustrated in FIG. 15, FIG. 16 illustrates a graph showing data from which the load information model estimates the temperature of the load over time and test data when the type of heated object 200 under the first cooking environment is the second container 220, and the surface material is matte.

Referring to FIG. 16, it is seen that the difference in the time point at which the temperature of the load 300 in the temperature data (pred) estimated by the load state estimation model estimates is about 160°C and 220°C and the time point at which the temperature of the load 300 in the test data (test) is about 160°C to about 220°C is reduced by about 15°C. Thus, when the load state estimation model of FIG. 16 estimates the temperature of the load 300 to be about 160°C or about 220°C, the temperature of the load 300 provided by the temperature measurement device 100 may be more accurate than that in FIG. 13.

To update the load state estimation model, the characteristics of the heated object 200 may be considered. For example, since the type of heated object 200 is the second container, it is considered that the temperature of the heated object 200 rises faster than in the case of the first container, and thus, the temperature measurement of the array sensor 120 is delayed. Thus, the load state estimation model may be updated to introduce a constant value for correcting the estimated temperature of the load 300.

Furthermore, the temperature measurement device 100 according to an embodiment of the present disclosure may acquire the temperature of the load 300 through the load state estimation models different for each type and surface material of the heated object 200.

For example, the heated object 200 may be grouped into a first container made of a glossy material, a first container made of a matte material, a second container made of a glossy material, and a second container made of a matte material. Thus, the controller 110 may receive four load state estimation models and acquire the temperature of the load 300 based on one of the load state estimation models according to the type and surface material of the obtained heated object 200.

As the different load state estimation models for each type and surface material of the heated object 200 are used, there is an advantage in that an amount of computation for acquiring the temperature of the load 300 is reduced, and the accuracy is improved.

The group of heated objects 200 described above is only an example, and the heated objects 200 may be further divided into groups. Thus, the controller 110 may receive a segmented load state estimation model for each group from the server 600 and acquire the temperature of the load 300 using the load state estimation model different for each group of the heated object 200.

The temperature measurement device 100 according to an embodiment of the present disclosure may estimate the temperature of the load 300 in consideration of various environmental factors e in than conventional temperature measurement devices by using the load state estimation model as described in FIG. 13. In addition, the error value e' between the estimated temperature of the load 300 and the actual temperature of the load 300 may be minimized, and thus, the temperature measurement device 100 may accurately provide the temperature of the load 300.

According to the embodiment of the present disclosure, the device for measuring the temperature may be independently provided in the cooking appliance or cooking container and disposed at the optimal position at which the temperature of the object to be heated such as the cooking container having the various heights or the cooking container is accurately measured under the various cooking environments, and thus, the temperature of the load such as the food contained in the object to be heated may be accurately acquired.

According to the embodiment of the present disclosure, the temperature of the load may be accurately acquired even though the object to be heated and the heating portion are not concentrically disposed.

According to the embodiment of the present disclosure, the kind and material of the container may be acquired based on the temperature of at least a portion of the surface of the object to be heated to accurately provide the temperature of the load.

According to the embodiment of the present disclosure, the temperature of the load to which the cooking environment is reflected through the machine learning technique using the input data may be provided to improve the accuracy.

According to the embodiment of the present disclosure, both the object to be heated and the heating portion may be disposed in the sensing range of the sensor to accurately provide the temperature of the load based on the temperatures of the object to be heated and the heating portion.

The above description is merely illustrative of the technical idea of the present disclosure, and various modifications and changes may be made thereto by those skilled in the art without departing from the essential characteristics of the present disclosure.

Therefore, the embodiments of the present disclosure are not intended to limit the technical scope of the present disclosure but to illustrate the technical idea of the present disclosure, and the technical scope of the present disclosure is not limited by these embodiments.

**Claims**

1.  A device for measuring temperature, the device comprising:

    at least one array sensor (120) configured to measure a temperature of at least a portion of a surface of an object (200) to be heated, which is heated by a cooking appliance (400); and
    a controller (110) configured to acquire a temperature change rate depending on the measured temperature and acquire a surface material of the object (200) to be heated, based on the temperature chamber rate.

2.  The device according to claim 1, wherein the controller (110) is configured to measure the temperature of at least the portion of the surface of the object (200) to be heated by setting an emissivity differently depending on the surface material of the object (200) to be heated.

3.  The device according to claim 2, wherein the controller (110) is configured to:

    measure a temperature of the object (200) to be heated by setting the emissivity to a first emissivity when the surface of the object (200) to be heated is a matte material; and
    measure a temperature of the object (200) to be heated by the emissivity to a second emissivity less than the first emissivity when the surface of the object (200) to be heated is a glossy material.

4.  The device according to any one of claims 1 to 3, wherein the controller (110) is configured to acquire types of object (200) to be heated, based on a height of an area, in which a temperature change amount is equal to or greater than or equal to a preset reference amount, of an area measured by the array sensor (120).

5.  The device according to claim 4, wherein the controller (110) is configured to:

    acquire the type of object (200) to be heated as a first container (210) when the height of the area, in which the temperature change amount is equal to or greater than or equal to the preset reference amount, is equal to or greater than or equal to a preset reference height; and
    acquire the type of object (200) to be heated as a second container (220) when the height of the area, in which the temperature change amount is equal to or greater than the preset reference amount, is less than the reference height,
    wherein the first container (210) comprises a container having a height equal to or greater than the preset reference height, and
    the second container (220) comprises a container having a height less than the preset reference height.

6.  The device according to claim 4, wherein the controller (110) is configured to acquire a temperature of a load (300) based on a temperature of a side surface of the surface of the object (200) to be heated when the type of object (200) to be heated comprises a pot.

7.  The device according to claim 4, wherein the controller (110) is configured to acquire a temperature of a load (300) based on temperatures of a side surface and a bottom surface of the surface of the object (200) to be heated when the type of object (200) to be heated comprises a frying pan.

8.  The device according to claim 4 or 5, wherein the controller (110) is configured to acquire a volume of a load (300) in the object (200) to be heated, based on a height of an area, in which a temperature change amount is equal to or greater than a preset reference value, of the area measured by the array sensor (120).

9.  The device according to any one of claims 1 to 8, wherein a horizontal length of a sensing range of the array sensor (120) is equal to or less than a horizontal length of the object (200) to be heated, and
    a vertical length of the sensing range is equal to or greater than a vertical length of the object (200) to be heated.

10. The device according to any one of claims 1 to 5, further comprising an output interface (130) configured to output a content corresponding to a state of a load (300) in the object (200) to be heated among contents received from a server (600).

11. The device according to claim 10, wherein the controller (110) is configured to output an alarm through the output interface (130) or transmit an alarm output signal to an external device when the temperature of the load (300) reaches a preset reference temperature.

12. The device according to any one of claims 1 to 5, wherein the controller (110) is configured to acquire a state of a load (300), which comprises a temperature of the load (300) in the object (200) to be heated, based on at least one load state estimation model received from a server (600),
    wherein the load state estimation model comprises a model that outputs the state of the load (300) when the temperature of at least the portion of the surface of the object (200) to be heated, which is measured by the array sensor (120), is input.

13. The device according to claim 12, wherein the controller (110) is configured to receive a plurality of load state estimation models from the server (600) and output the state of the load (300) by using one of the plurality of load state estimation models, based on information on the object (200) to be heated.

14. The device according to any one of claims 1 to 13, wherein the array sensor (120) is provided to be inclined so that at least a portion of the object (200) to be heated and a heating portion (410) provided in the cooking appliance (400) are disposed within a sensing range.

15. The device according to any one of claims 1 to 14,
    wherein the controller (110) is configured to acquire a temperature of a load (300) in the object (200) to be heated, based on temperatures of the object (200) to be heated and the heating portion (410), which are measured by the array sensor (120).

【Figure 1】

100

【Figure 2】

【Figure 3】

100

400

C

410

【Figure 4】

400

100

l

200

410

【Figure 5】

【Figure 6】

【Figure 7】

【Figure 8】

h1
h2
h
400
411
412
410

【Figure 9】

211
210
212
300
h3
h1

【Figure 10】

300
221
222
221
220

【Figure 11】

| Matte | Emissivity [ε] | | | |
|---|---|---|---|---|
| | 0.95 | 0.5 | 0.35 | **0.92** |
| First spot(X1) | 64.2 | 66.7 | 68.0 | **62.7** |
| Second spot(X2) | 63.2 | 97.2 | 124 | **63.0** |
| Third spot(X3) | 63.1 | 96.9 | 124 | **62.9** |
| Thermal image | | | | |

【Figure 12】

| Glossy | Emissivity [ε] | | | |
|---|---|---|---|---|
| | 0.95 | 0.5 | 0.35 | **0.29** |
| First spot(X1) | 82.9 | 89.4 | 92.8 | **94.5** |
| Second spot(X2) | 43.4 | 63.7 | 82.0 | **95.7** |
| Third spot(X3) | 44 | 64.5 | 82.7 | **95.8** |
| Thermal image | | | | |

【Figure 13】

| ACQUIRE DATA CONSIDERING ENVIRONMENTAL FACTORS | SET SAME EXPERIMENT CONDITION — S51 |
| | ACQUIER TEMPERATURE REPRODUCIBILITY OF LOAD — S53 |
| | DEFINE ENVIRONMENT FACT AND REFLECT DEFINED ENVIRONMENT FACE IN THE EXPERIMENT PLAN — S55 |
| | ACQUIRE DATA THROUGH REPEATED EXPERIMENT — S57 |
| EXAMINE LOAD STATE ESTIMATION MODEL | EXAMINE LOAD STATE ESTIMATION MODEL — S59 |
| VERIFY AND UPDATE LOAD INFORMATION ESTIMATION MODEL | VERIFY MODEL IN VARIOUS ENVIRONMENTS — S61 |
| | REFLECT VERIFICATION RESULTS TO LEARNING DATA WHEN ERROR VALUE IS ABOVE REFERENCE VALUE — S63 |
| | UPDATE LOAD STATE ESTIMATION MODEL — S65 |

【Figure 14】

| First cooking environment | Mean | StDev | N |
|---|---|---|---|
| Total | -4.967 | 2.550 | 254 |

Histogram of Pan_Total
Normal

Mean  -4.967
StDev  2.550
N       254

| Second cooking environment | Mean | StDev | N |
|---|---|---|---|
| Total | -5.913 | 2.202 | 256 |

Histogram of Pan_Total
Normal

Mean  -5.913
StDev  2.202
N       256

【Figure 15】

【Figure 16】

Europäisches
Patentamt

European
Patent Office

Office européen
des brevets

## EUROPEAN SEARCH REPORT

Application Number

EP 23 21 4509

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 742 052 A1 (WHIRLPOOL CO [US]) 25 November 2020 (2020-11-25) * figures 1-5 * * paragraphs [0002], [0010], [0018], [0020], [0023], [0030], [0037], [0068], [0072], [0073] * | 1-15 | INV. G01J5/00 ADD. F24C7/08 H05B6/06 G01J5/02 |
| X | US 2013/119049 A1 (GRABER WARREN S [US] ET AL) 16 May 2013 (2013-05-16) | 1-4, 9-13,15 | |
| A | * paragraphs [0006], [0010], [0031], [0034] * | 5-8,14 | |
| X | CN 110 658 734 A (FOSHAN SHUNDE MIDEA WASHING APPLIANCES MFG CO LTD) 7 January 2020 (2020-01-07) | 1-4, 9-13,15 | |
| A | * abstract; figure 3 * * paragraphs [0063], [0064] - [0069], [0184] * | 5-8,14 | |
| A | US 2021/251263 A1 (KNIGHTON JEFFERY FORBES [US] ET AL) 19 August 2021 (2021-08-19) * figures 1-3 * * paragraphs [0005], [0027], [0035] - [0037], [0092] - [0094] * | 1-15 | TECHNICAL FIELDS SEARCHED (IPC) G01J H05B F24C |

The present search report has been drawn up for all claims

| Place of search | Date of completion of the search | Examiner |
|---|---|---|
| Munich | 26 April 2024 | Gangl, Martin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
 
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 21 4509

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2024

| Patent document cited in search report | | Publication date | Patent family member(s) | | Publication date |
|---|---|---|---|---|---|
| EP 3742052 | A1 | 25-11-2020 | CN | 212157290 U | 15-12-2020 |
| | | | EP | 3742052 A1 | 25-11-2020 |
| | | | US | 2020367692 A1 | 26-11-2020 |
| US 2013119049 | A1 | 16-05-2013 | US | 2013119049 A1 | 16-05-2013 |
| | | | US | 2017142781 A1 | 18-05-2017 |
| CN 110658734 | A | 07-01-2020 | NONE | | |
| US 2021251263 | A1 | 19-08-2021 | EP | 4103026 A1 | 21-12-2022 |
| | | | US | 2021251263 A1 | 19-08-2021 |
| | | | WO | 2021162821 A1 | 19-08-2021 |

EPO FORM P0459

For more details about this annex : see Official Journal of the European Patent Office, No. 12/82

**EP 4 390 346 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220182116